# EUROPÄISCHE PATENTANMELDUNG

(11) **EP 1 175 079 A1**
(43) Veröffentlichungstag der Anmeldung: **23.01.2002**
(21) Anmeldenummer: 01117194.9
(22) Anmeldetag: 16.07.2001
(51) Int. Cl.: H04M 17/00, G07F 7/02, G07F 19/00

(54) **ÖVerfahren und Selbstbedienungsautomat zum Aufladen von Gesprächszeitkonten von Mobiltelefonen**

(30) Priorität: 18.07.2000 DE 10034760
(71) Anmelder: Auto Sound Nord Burgmann & Tiusanen oHG, 25421 Pinneberg (DE)
(72) Erfinder: Burgmann, Andreas, 25370 Seester (DE); Tiusanen, Hans, 25485 Hemdingen (DE)
(74) Vertreter: Thomas, Götz

(57) **Zusammenfassung**

Die Erfindung betrifft ein Verfahren zum Aufladen von Gebühren- oder Gesprächszeitkonten von Mobiltelefonen sowie zum Abheben von Geldbeträgen von den Gebühren- oder Gesprächszeitkonten an Selbstbedienungsautomaten (2). Die Erfindung betrifft weiter einen dazu verwendbaren Selbstbedienungsautomaten (2). Zum Aufladen der Gebühren- oder Gesprächszeitkonten wird erfindungsgemäß vorgeschlagen, dass nach Eingabe einer Vorwahlnummer und einer Telefonnummer eines Mobiltelefons, dessen Gebühren- oder Gesprächszeitkonto aufgeladen werden soll, aus der eingegebenen Vorwahlnummer automatisch der Netzbetreiber (10, 12, 14) ermittelt wird, in dessen Mobilfunknetz das Mobiltelefon mit der eingegebenen Rufnummer angemeldet ist, und nach Einzahlung eines Geldbetrags am Automaten (2), dieser die eingegebene Telefonnummer und die Höhe des eingezahlten Geldbetrags direkt oder indirekt zum Gebührenrechner (4, 6, 8) des ermittelten Netzbetreibers (10, 12, 14) übermittelt, woraufhin der eingezahlte Geldbetrag vom Gebührenrechner (4, 6, 8) auf das Gebühren- oder Gesprächszeitkonto des Mobiltelefons gutgeschrieben wird.

## Beschreibung

Die Erfindung betrifft ein Verfahren zum Aufladen von Gebühren- oder Gesprächszeitkonten von Mobiltelefonen sowie zum Abheben von Geldbeträgen von den Gebühren- oder Gesprächszeitkonten an einem Selbstbedienungsautomaten. Die Erfindung betrifft weiter einen dazu verwendbaren Selbstbedienungsautomaten sowie ein Kommunikationssystem, das eine Mehrzahl dieser Selbstbedienungsautomaten umfasst.

Aufgrund der großen Beliebtheit von Mobiltelefonen bei Jugendlichen, die häufig weder regelmäßige Einkünfte noch ein eigenes Konto besitzen, werden Mobiltelefone von den Betreibern der unterschiedlichen Mobilfunknetze in Deutschland häufig in Verbindung mit sogenannten Startpaketen bzw. Prepaid- oder Guthabenkarten angeboten, die zum Beispiel unter dem Namen Xtra-Card (D1-Netz), CallYa-Card (D2-Netz) bzw. Free&Easy Card (E1-Netz) vertrieben werden. Die Startpakete beinhalten die Freischaltung des erworbenen Mobiltelefons, d.h. die Aktivierung des Anschlusses zwecks Zugang zum Netz und die Zuteilung einer Telefonnummer, die zusammen mit einer für das Netz spezifischen Vorwahlnummer (D1: 171, D2: 172, E1: 177) eine Rufnummer bildet, unter der das Mobiltelefon von anderen Mobil- oder Festnetztelefonen aus erreichbar ist. Die Startpakete beinhalten weiter ein Gesprächsguthaben in einer vorbestimmten Höhe, zum Beispiel 50.- DM, auf einem vom Netzbetreiber unter der Teilnehmernummer des Mobiltelefons für dessen Besitzer geführten Gebühren- oder Gesprächszeitkonto. Das Gebühren- oder Gesprächszeitkonto gestattet es, über einen vorgegebenen Zeitraum vom Mobiltelefon aus zu telefonieren, vorausgesetzt das Konto weist ein ausreichendes Guthaben für die benötigten Gesprächseinheiten auf. Dieses Guthaben wird augenblicklich bei den meisten Netzbetreibern durch sogenannte Guthabenkarten aufgefüllt, die unter der Bezeichnung XtraCash (D1-Netz), CallNow (D2-Netz) bzw. Free&Easy Cash (E1-Netz) von den Netzbetreibern (D1: DeTeMobil/Deutsche Telekom AG, D2: Mannesmann Mobilfunk/Mannesmann AG, E1: E-Plus Mobilfunk) angeboten werden. Die Startpakete und die Guthabenkarten werden auch von sogenannten Service-Providern (z.B. Talkline GmbH, Debitel Kommunikationstechnik GmbH oder MobilCom GmbH & Co. KG) vertrieben, die nicht über eigene Netze verfügen sondern als Zwischenhändler agieren, wobei sie bei den Netzbetreibern große Pakete Gesprächszeit, sogenannte "air time", in deren Netzen einkaufen und diese dann stückeln und entweder an sogenannte Wiederverkäufer, besonders Elektronikfachgeschäfte, oder direkt an die Besitzer der Mobiltelefone verkaufen.

Der Verkauf der Guthabenkarten erfolgt unter anderem über Selbstbedienungsautomaten, die Auflade- oder Guthabenkarten von einem oder mehreren Netzbetreibern mit jeweils unterschiedlichen Nennwerten enthalten, welche über eine Wahltaste ausgewählt und nach Einzahlung eines entsprechenden Geldbetrags in Geldscheinen und/oder Münzen oder nach Einführen einer Kreditkarte in ein Lesegerät des Automaten von diesem ausgegeben werden. Die ausgegebenen Karten sind mit einer aufgedruckten Geheimzahl versehen, die teilweise noch durch einen Überzug verdeckt ist. Nach dem Wegrubbeln des Überzugs kann die Geheimzahl abgelesen und an der Tastatur des Mobiltelefons eingegeben werden, dessen Konto aufgeladen werden soll. Nach einer Bestätigung der Eingabe wird die eingegebene Geheimzahl auf dem Display des Mobiltelefons angezeigt und nach einer erneuten Bestätigung der Nennwert der Guthabenkarte dem Gebühren- oder Gesprächszeitkonto des Mobiltelefons gutgeschrieben.

Bei diesem Kartensystem wird als nachteilig angesehen, dass es beim Ablesen und Eingeben der vielstelligen Geheimzahlen nicht selten zu Ablese- oder Übertragungsfehlern kommt, insbesondere auch deshalb, weil die Lesbarkeit der Geheimzahlen beim Freirubbeln beeinträchtigt wird. Bei mehrfach wiederholter Eingabe einer falschen Geheimzahl wird das zum Mobiltelefon zugehörige Gebühren- oder Gesprächszeitkonto gesperrt. Ein weiterer Nachteil ist der nicht unbeträchtliche Aufwand für die Herstellung, die Lagerhaltung und den Vertrieb der Karten, sowie der finanzielle Aufwand des Wiederverkäufers für die Bevorratung von vorbezahlten Karten bis zum Verkauf.

Als Alternative zum Kauf von Guthabenkarten kann das Gebühren- oder Gesprächszeitkonto auch mittels Kreditkarte und bei einigen Netzbetreibern durch Abbuchung von einem Bankkonto aufgeladen werden, jedoch nur unter der Voraussetzung, dass eine Bonitätsprüfung positiv ausfällt und einer Teilnahme am Lastschriftverfahren zugestimmt wird. Gerade Jugendliche als eine der hauptsächlichen Zielgruppen für den Verkauf von Mobilfunktelefonen besitzen jedoch häufig kein Bankkonto und noch weniger eine Kreditkarte.

In den USA, wo das Festnetz einschließlich der öffentlichen Telefone unter mehreren Netzbetreibern aufgeteilt ist, gibt es unter der Bezeichnung "telefone card" ähnliche Guthabenkarten, die jeweils für das Netz eines einzigen Festnetzbetreibers gültig sind und über Selbstbedienungsautomaten vertrieben werden, von denen einige in den US Patenten 5,868,236, 5,696,908 bzw. 5,673,309 offenbart sind.

Aus der EP 0 901 269 A1 ist weiter bereits ein Verfahren zum Aufladen eines Mitteilungseinheiten-Kontos eines Mobiltelefons bekannt, bei dem das Mobiltelefon in eine Öffnung eines Selbstbedienungsautomaten eingeführt wird, um über eine elektrische Steckverbindung automatisch eine in einem ROM des Mobiltelefons gespeicherte Anschlusskennnummer auszulesen, und bei dem dann am Automaten ein Geldbetrag eingezahlt wird, woraufhin der Automat die Höhe des Geldbetrags und die Anschlusskennnummer an eine Voraufladungssteuereinheit übermittelt wird, die Teil einer das Mobiltelefon freischaltenden Schalteinheit ist. Dieses Verfahren gestattet jedoch keine Aufladung des Kontos ohne das jeweilige Mobilfunkgerät, was eine Aufladung durch Dritte, zum Beispiel Eltern oder Großeltern von jugendlichen Mobiltelefonbesitzern unmöglich macht. Außerdem müssen sämtliche Mobiltelefone mit einem passenden Anschluss zur Herstellung der Steckverbindung im Automaten ausgestattet werden, was einen großen Aufwand erfordert. Darüber hinaus wird bei dem bekannten Verfahren nur eine Verbindung zu einer einzigen Schalteinheit, d.h. einem einzigen Netzbetreiber hergestellt. Eine Auswahl verschiedener Schalteinheiten anhand der übertragenen Nummer ist nicht vorgesehen.

Die WO 00/33264 offenbart ein Verfahren zur Wiederaufladung eines Kontos in einem Prepaid-System für ein Mobilfunkgerät mit einem Geldbetrag, bei dem ein Benutzer des Mobilfunkgeräts mit diesem Gerät eine USSD-Dienstmeldung aussendet, die einen Dienstcode zur Identifizierung eines Geldladedienstes sowie eine geheime Wertnummer umfasst. Die USSD-Dienstnummer wird über das Home Location Register des Benutzers an ein Reload-System weitergeleitet, das die Wertnummer validiert und das Konto mit einem der Wertnummer entsprechenden Geldbetrag auflädt. Die USSD-Dienstmeldung kann die MSISDN-Nummer des Mobilfunkgeräts enthalten, d.h. die spezifische Telefonnummer des Benutzers innerhalb seines Mobilfunknetzes, die im Reload-System als Benutzeridentifizierung für das Konto des Benutzers dient. Zur Wiederaufladung des Kontos ist jedoch das jeweilige Mobilfunkgerät erforderlich, so dass eine Aufladung durch Dritte nicht möglich ist. Eine Identifikation von einem von mehreren verschiedenen Netzbetreibern anhand der USSD-Dienstmeldung ist ebenfalls nicht vorgesehen.

Die EP 0 848 537 A1 offenbart ein Verfahren zum Wiederaufladen eines Guthabenkontos eines Mobiltelefons mit einem festen Geldbetrag, bei dem die Aufladung durch den Kauf einer Guthabenkarte und die Übermittlung einer Sicherheitsnummer der Guthabenkarte über das Mobiltelefon an eine Diensteplattform erfolgt, welche das Mobiltelefon anhand seiner Calling Line Identity identifiziert, oder mittels Kreditkarte durch Anwahl der Diensteplattform, Eingabe einer PIN-Nummer, der Kreditkartennummer und eines Verfallsdatums erfolgt. Eine dritte Alternative für Teilnehmer eines bestimmten Netzes sieht vor, dass innerhalb des Netzes eine spezielle Servicenummer angewählt und die MSISDN-Nummer eines Mobiltelefons eingegeben wird, dessen Guthabenkonto aufgeladen werden soll, woraufhin auf diesem Guthabenkonto ein fester Geldbetrag gutgeschrieben wird, der anschließend auf der monatlichen Rechnung des Netzteilnehmers erscheint. Sämtliche Verfahren sehen jedoch nur die Aufladung von Gebührenkonten innerhalb eines einzigen Netzes vor, wobei die zuletzt genannte Alternative zudem ein reguläres Teilnehmerverhältnis voraussetzt.

Wegen der großen Verbreitung von Mobiltelefonen unter Jugendlichen wurde bereits vorgeschlagen, das Gebühren- oder Gesprächszeitkonto beim Netzbetreiber nicht nur zur Bezahlung von Telefongesprächen zu nutzen, sondern auch zum Kauf von Waren aus einem Verkaufsautomaten. Noch interessanter ist jedoch die Möglichkeit eines Geldtransfers vom Gebühren- oder Gesprächszeitkonto zu einem Selbstbedienungsautomaten der eingangs genannten Art, so dass an diesem nicht nur das Gebühren- oder Gesprächszeitkonto aufgeladen sondern auch Geld von diesem Konto abgehoben werden kann, ohne dass der Mobiltelefonbesitzer ein Bankkontos benötigt. Dies ist insbesondere bei kleineren Geldbeträgen von Vorteil, während die Schnelligkeit des Geldtransfers insbesondere bei Geldtransfers ins Ausland Vorteile bietet, die ohne eine Bankkonto mit Scheckkarte im Allgemeinen bisher sehr langsam oder teuer und nur während der normalen Banköffnungszeiten möglich sind.

Ausgehend hiervon liegt der Erfindung die Aufgabe zugrunde, ein Verfahren zum Aufladen von Gebühren- oder Gesprächszeitkonten von Mobiltelefonen an einem Selbstbedienungsautomaten bereitzustellen, das eine Aufladung beliebiger Gebühren- oder Gesprächszeitkonten bei einer Mehrzahl verschiedener Betreiber von Mobilfunknetzen außerhalb der normalen Geschäftszeiten sowie durch Dritte ohne das Mobiltelefon selbst ermöglicht, auf Seiten des Besitzers des Mobiltelefons oder der Dritten weder ein Bankkonto noch ein Teilnehmerverhältnis in einem der Mobilfunknetze erforderlich macht, Ablese- und Übertragungsfehler weitgehend vermeidet, Manipulationen nahezu unmöglich macht und zudem einen geringeren Aufwand verursacht, sowie ein Verfahren zum Abheben von Geldbeträgen von einem Gebühren- oder Gesprächszeitkonto an einem Selbstbedienungsautomaten. Der Erfindung liegt außerdem die Aufgabe zugrunde, Selbstbedienungsautomaten und ein Kommunikationssystem mit einer Mehrzahl von Selbstbedienungsautomaten bereitzustellen, die eine Aufladung eines Gebühren- oder Gesprächszeitkonto eines beliebigen Mobiltelefons allein durch Einzahlung eines Geldbetrags und Eingabe der Rufnummer des Mobiltelefons gestatten und vorzugsweise auch zum Abheben von Geldbeträgen geeignet sind.

Diese Aufgabe wird erfindungsgemäß im Hinblick auf die Verfahren durch die Merkmale des Patentanspruchs 1 und 11, sowie im Hinblick auf den Selbstbedienungsautomaten und das Kommunikationssystem durch die Merkmale der Patentansprüche 7 und 8 bzw. 9 und 10 sowie 12 und 13 gelöst.

Der Erfindung liegt der Gedanke zugrunde, zur Übermittlung der Informationen, die zur Aufladung eines Gebühren- oder Gesprächszeitkontos bzw. zur Abhebung von Geldbeträgen vom Konto benötigt werden, nicht das Mobiltelefon eines Kunden sondern einen Selbstbedienungsautomaten zu benutzen, der eine Kommunikationsvorrichtung aufweist, mit der er unmittelbar oder mittelbar über einen zwischengeschalteten Zentralrechner eines Service-Providers oder Automatenaufstellers mit einem Gebührenrechner des Netzbetreibers Verbindung aufnehmen kann. Der Selbstbedienungsautomat weist eine Annahmevorrichtung zur Einzahlung eines Geldbetrags, eine Tastatur oder tastempfindliche Anzeige zur Eingabe der Rufnummer des Mobiltelefons und eine Ausgabevorrichtung für Wechselgeld auf, die auch zur Abhebung von Geldbeträgen verwendet werden kann.

Im Unterschied zum Stand der Technik aus der EP 0 901 269 A1 ist der Selbstbedienungsautomat in der Lage, allein oder in Verbindung mit einem externen Rechner aus der Vorwahlnummer der eingegebenen Rufnummer den Netzbetreiber zu ermitteln, in dessen Mobilfunknetz das Mobiltelefon mit der eingegebenen Rufnummer angemeldet ist bzw. auf Verlangen und nach vorheriger Identifikation des Mobiltelefonbesitzers einen von diesem angeforderten Geldbetrag auszugeben, der dann von seinem Gebühren- oder Gesprächszeitkonto abgebucht wird. Während beim Aufladen eines Gebühren- oder Gesprächszeitkontos die Höhe des eingezahlten Geldbetrags in Kombination mit der eingegebenen Ruf- oder Telefonnummer an den Gebührenrechner des Netzbetreibers übermittelt wird, um ihn dort auf dem durch die Telefonnummer identifizierten Gebühren- oder Gesprächzeitkonto gutzuschreiben, ist beim Abheben von Geld vom Gebühren- oder Gesprächszeitkonto zusätzlich eine Identifikation des Benutzers durch Eingabe eines aus Buchstaben und/oder Ziffern bestehenden geheimen Passworts oder durch Erkennung eines benutzerspezifischen Merkmals, wie beispielsweise eines Finger- oder Handabdrucks oder eines anderen unverwechselbaren Körpermerkmals erforderlich, die mit einem im Gebührenrechner gespeicherten Passwort bzw. benutzerspezifischen Merkmal verglichen werden, sowie eine Überprüfung der Höhe eines Guthabens auf dem Gebühren- oder Gesprächszeitkonto, das mindestens dem abzuhebenden Betrag entsprechen muss, sofern dem Mobilfunkbesitzer nicht eine gewisse Kreditlinie eingeräumt wird.

Bei dem erfindungsgemäßen Verfahren zur Aufladung eines Gebühren- oder Gesprächszeitkontos nutzt man aus, dass dazu eigentlich nur zwei Informationen benötigt werden, nämlich erstens eine zuverlässige Bestätigung über die Einzahlung eines der Höhe nach bekannten Geldbetrags und zweitens die Zuordnung dieses Geldbetrags zu einem bestimmten Mobiltelefon. Die zuerst genannte Information steht dem Automaten unmittelbar nach der Einzahlung eines Geldbetrags ohne weitere Maßnahme zur Verfügung, während zur Erlangung der zuletzt genannten Information lediglich die Eingabe der Rufnummer des begünstigten Mobiltelefons vor oder nach der Einzahlung des Geldbetrags am Selbstbedienungsautomaten erforderlich ist, bevor beide Informationen vom Automaten automatisch in Kombination direkt oder indirekt an den Gebührenrechner des aus der Vorwahlnummer ermittelten Netzbetreibers übermittelt werden können.

Dadurch kann am Selbstbedienungsautomaten außerhalb der normalen Geschäftszeiten und ohne das Erfordernis eines Bankkontos das Gebühren- oder Gesprächszeitkonto eines beliebigen Mobiltelefons in einem beliebigen Mobilfunknetz durch Einzahlung eines Geldbetrags und durch Eingabe der Rufnummer des begünstigten Mobiltelefons aufgeladen werden. Diese Rufnummer, bestehend aus der Vorwahlnummer des jeweiligen Netzes und der netzspezifischen Telefonnummer (MSISDN-Nummer), ist den Eltern, Großeltern oder Bekannten eines Mobiltelefonbesitzers in der Regel bekannt oder kann vor der Aufladung bei einer Telefonauskunft ohne weiteres abgefragt werden.

Während bei einer Einzahlung von Bargeld am Automaten außer der Rufnummer keine weiteren Angaben erforderlich sind und daher vorzugsweise ausschließlich die Rufnummer des begünstigten Mobiltelefons eingegeben wird, sind bei einer Kreditkartenzahlung zusätzlich noch die bei derartigen Zahlungen üblichen Angaben erforderlich, wie beispielsweise der Kreditkartenausgeber und die Kreditkartennummer.

Durch die erfindungsgemäßen Merkmale entfällt auch das Erfordernis des Ausdruckens einer Guthaben- oder Telefonkarte und der damit verbundene Aufwand sowie das zu Ablese- und Übertragungsfehlern führende Erfordernis einer Übermittlung einer vielstelligen Geheimzahl durch den Kunden. Die Möglichkeit von Manipulationen ist ebenfalls weitgehend ausgeschlossen.

Ein weiterer Vorteil des erfindungsgemäßen Verfahrens liegt darin, dass im Gegensatz zu den bisherigen Verfahren das Mobiltelefon selbst nicht erforderlich ist, so dass das Gebühren- oder Gesprächszeitkonto auch durch Dritte aufgeladen werden kann, zum Beispiel von Eltern oder Großeltern eines jugendlichen Mobiltelefonbesitzers oder bei einem Auslandsaufenthalt von Deutschland aus, wobei zum Aufladen außer der Rufnummer keine weiteren Informationen benötigt werden. Grundsätzlich kann auch eine Aufladung von einem im Ausland aufgestellten Automaten aus vorgesehen werden, wobei dann ggf. zusätzlich zur Vorwahlnummer des Netzes vor dieser eine länderspezifische Kennung eingegeben wird, zum Beispiel 0049 oder 49 für Deutschland.

Die Eingabe der Rufnummer am Automaten erfolgt im einfachsten Fall durch manuelles Eintippen der Nummer in eine Tastatur des Automaten. Zusätzlich kann die Eingabe der Rufnummer auch über das Mobiltelefon erfolgen, dessen Gebührenkonto aufgeladen werden soll. In diesem Fall wird von diesem Mobiltelefon aus eine außen auf dem Automaten angegebene oder im Display abrufbare Servicenummer des Automaten angerufen, woraufhin der Automat die Rufnummer des Mobiltelefons den beim Anruf übertragenen Daten entnimmt. Auch eine Eingabe durch Auslesen der gespeicherten Rufnummer aus einer Magnet- oder anderen Speicherkarte ist möglich.

Eine augenblicklich bevorzugte Ausgestaltung der Erfindung sieht vor, dass ähnlich wie bei den zur Zeit verwendeten Guthabenkarten am Selbstbedienungsautomaten für jeden Netzbetreiber einer von mehreren vorgegebenen Nennwerten oder Geldbeträgen zur Aufladung des Kontos ausgewählt und anschließend eingezahlt werden kann. Für die Zukunft ist jedoch eine Einzahlung und Übermittlung beliebiger Geldbeträge vorgesehen.

Die oben genannten, zur Aufladung des Gebühren- oder Gesprächszeitkontos benötigten Informationen können entweder unmittelbar an den Gebührenrechner des ermittelten Netzbetreibers weitergeleitet werden, wobei vom Selbstbedienungsautomaten vorzugsweise eine Servicenummer des Gebührenrechners zwecks Übertragung der Daten telefonisch angewählt wird. Alternativ kann ein Zentralrechner eines Service-Providers oder Automatenaufstellers zwischengeschaltet werden, der mit einer Mehrzahl von Selbstbedienungsautomaten kommuniziert und die von den Automaten übermittelten Informationen an den richtigen Netzbetreiber weiterleitet, der ebenfalls anhand der eingegebenen Vorwahl vom Zentralrechner oder bereits vom Selbstbedienungsautomaten identifiziert wird.

Bei der zuletzt genannten Alternative kann der Service-Provider oder Automatenaufsteller auch als Zwischenhändler agieren, der vom Netzbetreiber Gesprächszeit einkauft und anschließend auf eigene Rechnung über die Selbstbedienungsautomaten an die Kunden weiterverkauft.

Bei Verwendung vorbestimmter Nennwerte kann diese Gesprächszeit vom Service-Provider oder Automatenaufsteller zum Beispiel in Form eines Vorrats an Geheimzahlen für jeden Nennwert vom Netzbetreiber eingekauft und im Zentralrechner gespeichert werden. Bei Eingang einer Rufnummer und der Höhe eines darauf eingezahlten Geldbetrags von einem der Selbstbedienungsautomaten wird diese Rufnummer, oder auch nur die Telefonnummer, d.h. die Rufnummer ohne Vorwahlnummer, vom Zentralrechner mit einer der gespeicherten, dem eingezahlten Geldbetrag entsprechenden Geheimzahlen kombiniert und dann zusammen mit der Geheimzahl an den Gebührenrechner des jeweils ermittelten Netzbetreibers übermittelt. Alternativ können die Geheimzahlen vom Zentralrechner bei einem Server des jeweiligen Netzbetreibers angefordert werden, nachdem der Zentralrechner von einem der Selbstbedienungsautomaten eine Rufnummer und die Höhe eines darauf eingezahlten Geldbetrags empfangen hat und der zugehörige Netzbetreiber aus der Vorwahl ermittelt worden ist, um anschließend die Geheimzahl in Verbindung mit der Rufnummer oder Telefonnummer an den Gebührenrechner des Netzbetreibers zu übermitteln.

Gemäß einer weiteren bevorzugten Ausgestaltung der Erfindung werden die vom Selbstbedienungsautomaten an den Gebühren- oder an den Zentralrechner übermittelten Informationen ebenso wie die vom Zentralrechner an den Gebührenrechner und/oder die vom Server an den Zentralrechner übermittelten Informationen vor ihrer Übermittlung ein- oder mehrfach verschlüsselt, so dass ein Missbrauch durch Abhören der Übermittlung vermieden werden kann.

Bei dem erfindungsgemäßen Verfahren zum Abheben von Geldbeträgen von einem Gebühren- oder Gesprächszeitkonto nutzt man aus, dass
Im folgenden wird die Erfindung anhand eines in der Zeichnung dargestellten Ausführungsbeispiels näher erläutert. Es zeigen:
Fig. 1: eine Vorderseitenansicht eines erfindungsgemäßen Selbstbedienungsautomaten zum Aufladen eines Gebühren- oder Gesprächszeitkontos eines Mobiltelefons;
Fig. 2: eine schematische Darstellung von Kommunikationswegen zwischen einer Mehrzahl der Selbstbedienungsautomaten, einem Zentralrechner eines Service-Providers oder Automatenaufstellers und einem Gebührenrechner eines Mobilfunknetzbetreibers.

Die in der Zeichnung dargestellten Selbstbedienungsautomaten 2 dienen dazu, durch Einzahlung eines Geldbetrags Gebühren- oder Gesprächszeitkonten von Mobiltelefonen mit einem im Voraus bezahlten Gesprächs- und/oder Zeitguthaben unmittelbar bei einem Gebührenrechner 4, 6, 8 eines Netzbetreibers 10, 12, 14 oder mittelbar über einen Zentralrechner 16 eines Service-Providers oder Automatenaufstellers 18 aufzuladen, um das Gesprächs- und/oder Zeitguthaben aufzustocken.

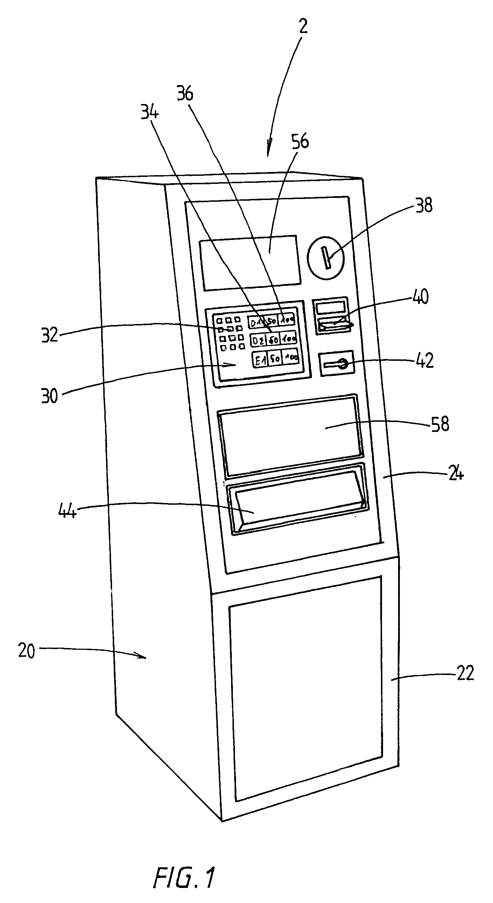

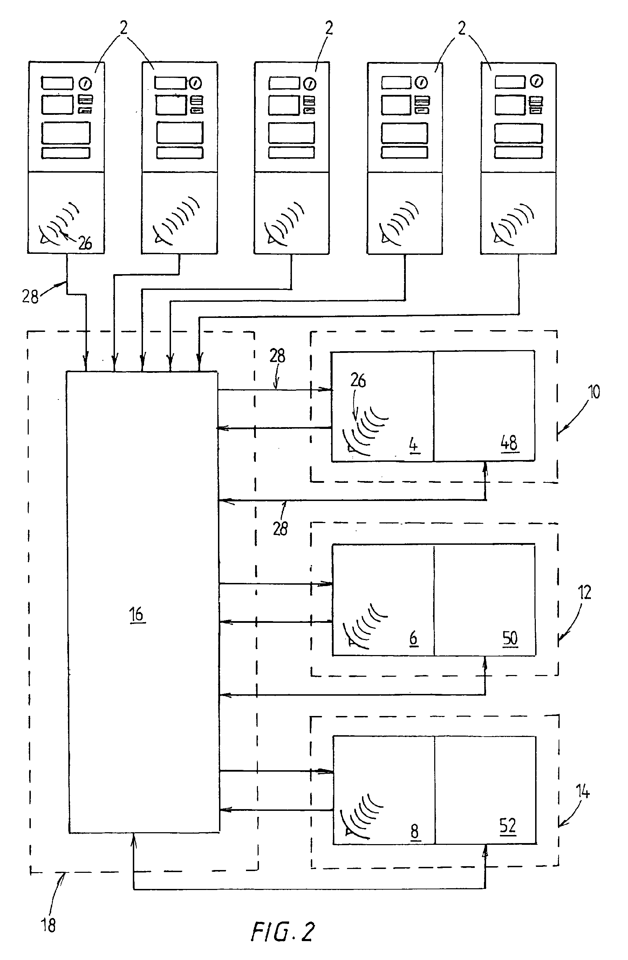

Wie am besten in Fig. 1 dargestellt, bestehen die Automaten 2 im Wesentlichen aus einem geschlossenen aufbruchsicheren Gehäuse 20 mit einem als Unterbau dienenden Unterteil 22 sowie einem Oberteil 24, in dem verschiedene Komponenten untergebracht sind, unter anderem eine über ein Modem (oder eine ISDN-Karte) an ein Telefonnetz 26, 28 (Fig. 2) angeschlossene Rechnereinheit (nicht dargestellt), zum Beispiel ein Personal Computer (PC), der mit einem auf der Vorderseite des Automaten 2 angeordneten, als Touchscreen ausgebildeten Display 30 sowie ein Belegdrucker (nicht dargestellt) zum Drucken von Zahlungsbelegen verbunden ist. Die Rechnereinheit enthält einen Speicher zum Speichern von Daten und Software, wobei die gespeicherte Software außer einem Betriebsprogramm für die Rechnereinheit und einigen Anwenderprogrammen ein Verschlüsselungsprogramm zur Datenverschlüsselung umfasst, mit dem über das Modem und das Telefonnetz 26, 28 weitergeleitete Daten vor ihrer Übermittlung verschlüsselt werden.

Wie am besten in Fig. 2 dargestellt, kommunizieren die Rechnereinheiten einer Mehrzahl von Selbstbedienungsautomaten 2 über das Telefonnetz 26, 28, das ein Mobilfunknetz 26 oder ein Festnetz 28 sein kann, entweder unmittelbar mit dem jeweiligen Gebührenrechner 4, 6, 8 der Netzbetreiber 10, 12, 14, ggf. auch nur eines einzigen Netzbetreibers, oder mit dem zwischengeschalteten Zentralrechner 16 des Service-Providers oder Automatenaufstellers 18.

Wie in Fig. 1 dargestellt, können auf dem Display 30 des Automaten mehrere Eingabefelder nebeneinander angeordnet sein, die mindestens eine Zifferntastatur 32 mit den Ziffern von 0 bis 9 und ggf. einer Löschtaste zum Löschen einer fehlerhaften Eingabe sowie eine Tastatur 34 mit mehreren Wahltasten 36 zur Auswahl eines gewünschten Geldbetrags umfassen, zum Beispiel 50.- DM oder 100.- DM, mit dem das Gebühren- oder Gesprächszeitkonto des Mobiltelefons mit der zuvor eingegebenen Rufnummer beim Netzbetreiber des zugehörigen Mobilfunknetzes aufgeladen werden soll.

Bevorzugt werden die Eingabefelder jedoch wie auf einem Computermonitor in Form von Fenstern hintereinander aufgerufen, wobei das Startfenster zweckmäßig den Umgang mit dem Touchscreen 30 erläutert und eine Starttaste aufweist. Bei Berührung der Starttaste erscheint eine Zifferntastatur, mit der Bitte die Rufnummer des Mobiltelefons einzugeben, dessen Gebühren- oder Gesprächszeitkonto aufgeladen werden soll. Die eingegebene Rufnummer wird auf dem Display dargestellt und um Bestätigung durch Berührung einer Bestätigungstaste gebeten. Anschließend wird von der Rechnereinheit aus der Vorwahl der eingegebenen Rufnummer der Netzbetreiber ermittelt, in dessen Mobilfunknetz das Mobiltelefon angemeldet ist, und dieser Netzbetreiber zusammen mit einer Reihe von Eingabefeldern angezeigt, die vorbestimmte Nennwerte oder Geldbeträge zeigen, mit denen das Gebühren- oder Gesprächszeitkonto aufgeladen werden kann, zum Beispiel 20.-, 50.- und 100.- DM. Nach einer Berührung von einem dieser Eingabefelder wird der Benutzer zur Einzahlung des angezeigten Nennwerts oder Geldbetrags aufgefordert.

Zur Einzahlung des angezeigten Geldbetrags in Form von Bargeld umfasst der Automat ein hinter einem Münzeinwurfschlitz 38 angeordnetes Münzprüf- und Münzzählgerät (nicht dargestellt) zum Überprüfen und Zählen von eingeworfenen Münzen, ein hinter einer Banknoteneinzugsvorrichtung 40 angeordnetes Banknotenprüf- und Banknotenlesegerät (nicht dargestellt) zum Überprüfen und Lesen von eingezogenen Banknoten, dessen Aufbau ebenso wie derjenige des Münzprüf- und Münzzählgeräts demjenigen von herkömmlichen Selbstbedienungsautomaten, wie zum Beispiel Fahrkartenautomaten, entspricht und daher hier nicht näher beschrieben werden soll. Hinter dem Münzprüf- und Münzzählgerät bzw. hinter dem Banknotenprüf- und Banknotenlesegerät ist ein herkömmlicher Münzspeicher bzw. Banknotenspeicher angeordnet, in denen das eingezahlte Bargeld gespeichert wird.

Für den Fall, dass der Geldbetrag mittels Kreditkarte eingezahlt werden soll, umfasst der Automat außerdem ein hinter einer Karteneinzugsvorrichtung 42 angeordnetes Magnetkartenlesegerät (nicht dargestellt), dessen Aufbau ebenso wie derjenige der Karteneinzugsvorrichtung 42 zum Beispiel von Fahrkartenautomaten oder Kontoauszugsdruckern her bekannt ist und daher hier ebenfalls nicht näher beschrieben werden soll. Die Handlungen, die zur Abbuchung des gewählten Geldbetrags vom Kreditkartenkonto vorzunehmen sind, werden auch hier nacheinander auf dem Display 30 angezeigt.

Wenn ein höherer Geldbetrag als der gewählte Nennwert eingezahlt wird, berechnet die Rechnereinheit die Differenz zum Nennwert und sorgt für eine Ausgabe von Wechselgeld in entsprechender Höhe aus einem Wechselgeldspeicher in einen von der Vorderseite des Automaten 2 her zugänglichen beleuchteten Ausgabeschacht 44 am unteren Ende des Oberteils 24. Der Ausgabeschacht 44 dient auch zur Ausgabe eines Zahlungsbelegs, der zuvor vom Belegdrucker mit einem Aufdruck versehen wird, der den eingezahlten Geldbetrag und die eingegebene Rufnummer anzeigt. Der Zahlungsbeleg kann sowohl als Steuernachweis als auch im Falle von Problemen als Nachweis für eine ordnungsgemäße Einzahlung des Geldbetrags auf das Gebühren- oder Gesprächszeitkonto des Mobiltelefons mit der auf dem Beleg aufgedruckten Rufnummer dienen.

Nach der Eingabe einer Rufnummer und der ordnungsgemäßen Einzahlung eines vorbestimmten Geldbetrags, sind zwei unterschiedliche Vorgehensweisen möglich, je nachdem ob die Aufladung des Gebühren- oder Gesprächszeitkontos eines Mobiltelefons unmittelbar mit dessen Netzbetreiber oder über einen Service-Provider oder Automatenaufsteller abgewickelt wird.

Im zuerst genannten Fall ermittelt die Rechnereinheit des Automaten 2 aus der Vorwahl der eingegebenen Rufnummer den Netzbetreiber 10, 12 oder 14, in dessen Mobilfunknetz das Mobiltelefon mit der eingegebenen Rufnummer gemeldet ist, und tritt anschließend über das Modem und das Telefonnetz (in Fig. 2 über das Mobilfunknetz 26) direkt mit dem Gebührenrechner 4, 6 bzw. 8 des ermittelten Netzbetreibers 10, 12 bzw. 14 in Verbindung und übermittelt diesem in Kombination die eingegebene Rufnummer und die Höhe des eingezahlten Geldbetrags, die zuvor von der Rechnereinheit mit Hilfe des Verschlüsselungsprogramms verschlüsselt worden sind. Im Gebührenrechner 4, 6, 8 ist ein Entschlüsselungsprogramm gespeichert, das die vom Automaten 2 übermittelten Daten entschlüsselt, bevor der eingezahlte Geldbetrag auf dem Gebühren- oder Gesprächszeitkonto des Mobiltelefons gutgeschrieben und das Konto damit aufgeladen wird.

Im zuletzt genannten Fall wird die eingegebene Rufnummer und der eingezahlte Geldbetrag nach vorheriger Verschlüsselung in Kombination über das Modem und das Telefonnetz (in Fig. 2 über das Festnetz 28) an den Zentralrechner 16 des Service-Providers oder Automatenaufstellers 18 übermittelt, der aus der eingegebenen Rufnummer den jeweiligen Netzbetreiber 10, 12 bzw. 14 ermittelt, soweit dies nicht bereits von Seiten der Rechnereinheit des Automaten 2 erfolgt ist. Um eine sehr schnelle Aufladung des Gebühren- oder Gesprächszeitkontos des Mobiltelefons zu ermöglichen, kann der Service-Provider oder Automatenaufsteller 18 bereits zuvor bei den Netzbetreibern 10, 12, 14 Gesprächszeit einkaufen. Diese Gesprächszeit wird von den Netzbetreibern 10, 12 bzw. 14 in Form von nennwert- und betreiberspezifischen Geheimzahlen geliefert, die dann im Zentralrechner 16 des Service-Providers oder Automatenaufstellers 18 gespeichert werden. Beim Eingang einer Rufnummer und der Höhe eines unmittelbar zuvor oder danach eingezahlten Geldbetrags von einem der Automaten 2 wird vom Zentralrechner 16 sofort eine der gespeicherten, dem eingezahlten Geldbetrag entsprechende Geheimzahl zusammen mit der Rufnummer an den Gebührenrechner 4, 6 bzw. 8 des zugehörigen Netzbetreibers 10, 12 bzw. 14 übermittelt, woraufhin dieser den entsprechenden Geldbetrag auf dem Gebühren- oder Gesprächszeitkonto gutschreibt.

Wenn eine etwas längere Bearbeitungszeit in Kauf genommen wird, kann alternativ eine dem eingezahlten Geldbetrag entsprechende Geheimzahl auch erst nach dem Eingang der Rufnummer und der Höhe des Geldbetrags bei einem Server 48, 50 bzw. 52 des ermittelten Netzbetreibers 10, 12 bzw. 14 angefordert werden und nach ihrem Eingang zusammen mit der Rufnummer an den Gebührenrechner 4, 6 bzw. 8 dieses Netzbetreibers 10, 12 bzw. 14 zurück übermittelt werden.

Bei dem in Fig. 1 dargestellten Automaten 2 kann hinter der Karteneinzugsvorrichtung 42 außer dem Magnetkartenlesegerät wahlweise auch noch ein Magnetkartenaufzeichnungsgerät (nicht dargestellt) angeordnet sein, das auf Anforderung, d.h. durch Berührung eines entsprechenden Eingabefeldes auf dem Display 30, eine Magnetkarte aus einem Vorrat im Gehäuse 20 entnimmt und den Magnetstreifen der Magnetkarte mit der zuvor am Display 30 eingegebenen Rufnummer beschreibt. Diese, mit einem entsprechenden Hinweis und/oder einer Funktionsangabe beschriftete Magnetkarte kann bei späteren Aufladevorgängen zur Eingabe der Rufnummer an einem der Automaten 2 verwendet werden, um Eingabefehler beim Eintippen der Rufnummer zu vermeiden.

An Stelle eines als Touchscreen 30 ausgebildeten Displays kann selbstverständlich auch eine herkömmliche LCD- oder LED-Anzeige in Verbindung mit einer daneben oder darunter angeordneten Zifferntastatur sowie mehreren Wahltasten zur Auswahl des Netzbetreibers und der gewünschten Nennwerte verwendet werden.

Der Automat kann weiter eine Alarmanlage umfassen, die auf unbefugte Manipulationen, d.h. zum Beispiel auf eine Gewalteinwirkung auf das Gehäuse 20 anspricht, wobei zuerst über einen eingebauten Lautsprecher (nicht dargestellt) eine auf einem Tonband oder Speicherchip gespeicherte Ansage darauf hinweist, dass das im Automaten 2 enthaltene Geld bei einem Aufbruch unbrauchbar gemacht wird, bevor bei weiteren Manipulationsversuchen ein lautes Alarmsignal abgegeben wird. Beim Ansprechen der Alarmanlage wird gleichzeitig von der Rechnereinheit über das Modem und das Telefonnetz 26, 28 der Automatenaufsteller 18, ein Sicherheitsdienst oder die Polizei informiert. Für den Fall eines vollständigen Aufbruchs des Automaten 2 enthält dieser eine mit dem Banknotenspeicher in Verbindung stehende Farbpatrone, welche die im Speicher enthaltenen Banknoten mit nicht entfernbarer Farbe einfärbt, sobald ein Schloss des Banknotenspeichers gewaltsam geöffnet wird. Weiter enthält das Betriebsprogramm der Rechnereinheit ein Unterprogramm, das bei einem Aufbruch des Automaten sämtliche gespeicherten Daten an den Zentralrechner 16 oder an einen Rechner eines Wartungsunternehmens überträgt und anschließend sämtliche Daten und Programme löscht, um einen späteren Missbrauch derselben zu Manipulationen an anderen Automaten 2 zu verhindern.

Darüber hinaus kann im Speicher der Rechnereinheit des Automaten 2 ein Fehlerdiagnose-Softwareprogramm gespeichert sein, das bei Bedienungsstörungen des Automaten 2 aktiviert wird und die Fehlerursache ermittelt. Diese wird dann über das Modem und das Telefonnetz 26, 28 an den Zentralrechner 16 oder an ein Wartungsunternehmen übermittelt, von wo aus versucht wird, den Fehler zuerst durch Übermittlung von Befehlen über das Telefonnetz, zum Beispiel durch Auslösen eines Neustarts der Rechnereinheit zu beheben, bevor Servicepersonal zum Automaten 2 geschickt wird.

Weiter ist im Speicher der Rechnereinheit ein Programm gespeichert, das im Zuge jeder Leerung des Automaten 2 beim Öffnen des Gehäuses 20 anspricht und den aktuellen Bargeldbestand ggf. zusammen mit anderen Daten, wie Übertragungsprotokoll, Wechselgeldbestand, Datum und Uhrzeit an den Zentralrechner 16 meldet und nach der Leerung dem dazu eingesetzten Personal einen Quittungsbeleg mit den übermittelten Daten ausdruckt.

Neben dem Münzeinwurfschlitz 38 sowie über dem Ausgabeschacht 44 sind jeweils Informationstafeln 56, 58 hinter transparentem Kunststoff auf der Vorderseite des Automaten 2 angebracht, auf denen der Kunde Informationen über dessen Aufgabe und Funktionsweise erhält.

Wenn der Automat 2 nicht nur zur Aufladung von Gebühren- oder Gesprächszeitkonten sondern auch zur Abhebung von Geldbeträgen von diesen Konten verwendet werden soll, werden die Gebührenrechner 4, 6, 8 der Netzbetreiber 10, 12, 14 zusätzlich mit einer Vorrichtung ausgestattet, die ein zusammen mit der Rufnummer am Automaten (2) eingegebenes, bevorzugt aus einer Ziffernfolge bestehendes Passwort mit einem unter der Adresse der Rufnummer in einem Speicher des Gebührenrechner gespeicherten Passwort vergleicht und die Höhe eines durch Eingabe an der Tastatur angeforderten Geldbetrags mit der Höhe des Guthabens auf dem durch die Rufnummer identifizierten Gebühren- oder Gesprächszeitkonto vergleicht. Wenn die beiden Passwörter übereinstimmen und das Guthaben auf dem Gebühren- oder Gesprächszeitkonto den angeforderten Geldbetrag übersteigt, übermittelt der Gebührenrechner über das Festnetz 28 oder das Mobilfunknetz 26 ein Freigabesignal zum Automaten, um die Ausgabe des angeforderten Geldbetrags zu autorisieren.

Das Freigabesignal enthält zweckmäßigerweise ebenfalls die Rufnummer des Mobiltelefons, von dessen Gebühren- oder Gesprächszeitkonto der Geldbetrag abgehoben wird, sowie die Höhe des abgehobenen Geldbetrags, die vor der Ausgabe des Geldbetrags noch einmal mit den in der Rechnereinheit gespeicherten Daten verglichen werden, um eine fehlerhafte Ausgabe zu vermeiden.

Zur Identifikation eines zu Abhebungen vom Konto berechtigten Benutzers kann auch ein Fingerabdruck oder ein anderes körperspezifisches Merkmal des Benutzers verwendet werden, wenn der Selbstbedienungsautomat mit einer Einrichtung zur Erkennung dieses Merkmals ausgestattet wird.

Wie zuvor beschrieben, kann die Übermittlung der Informationen unmittelbar zwischen dem Selbstbedienungsautomaten 2 und dem Gebührenrechner 4, 6, 8 oder über einen zwischengeschalteten Rechner 16 eines Service-Providers oder Automatenaufstellers erfolgen. Wenn der Automat 2 mit den Gebührenrechnern 4, 6, 8 mehrerer verschiedener Netzbetreiber 10, 12, 14 kommuniziert, wird der zu einer Rufnummer zugehörige Netzbetreiber 10, 12, 14 vom Automaten 2 auch im Falle einer Abhebung vom Gebühren- oder Gesprächszeitkonto anhand der Vorwahlnummer der eingegebenen Rufnummer ermittelt und anschließend die Verbindung zum ermittelten Rechner 4, 6, 8 hergestellt.

An Stelle einer Eingabe der Rufnummer, des abzuhebenden Geldbetrags und des Passworts an der Tastatur 34 oder am Touchscreen 30 kann die Eingabe falls erwünscht auch wieder über das Mobiltelefon erfolgen.

## Patentansprüche

1. Verfahren zum Aufladen von Gebühren- oder Gesprächszeitkonten von Mobiltelefonen, die in Mobilfunknetzen einer Mehrzahl von verschiedenen Netzbetreibern (10, 12, 14) mit unterschiedlichen Vorwahlnummern jeweils unter einer netzspezifischen Telefonnummer angemeldet sind, an Selbstbedienungsautomaten (2), umfassend die Schritte:
- an einem der Selbstbedienungsautomaten (2) werden die Vorwahlnummer und die Telefonnummer eines Mobiltelefons eingegeben, dessen Gebühren- oder Gesprächszeitkonto aufgeladen werden soll, sowie ein Geldbetrag eingezahlt,
- der Selbstbedienungsautomat (2) oder ein mit einer Mehrzahl von Selbstbedienungsautomaten (2) kommunizierender Zentralrechner (16) eines Service-Providers oder Automatenaufstellers (18) ermittelt anhand der eingegebenen Vorwahlnummer den Netzbetreiber (10, 12, 14), in dessen Mobilfunknetz das Mobiltelefon angemeldet ist,
- der Selbstbedienungsautomat (2) oder Zentralrechner (16) stellt eine Verbindung zu einem Gebührenrechner (4, 6, 8) des ermittelten Netzbetreibers (10, 12, 14) her und übermittelt diesem die Telefonnummer und die Höhe des eingezahlten Geldbetrags,
- der Gebührenrechner (4, 6, 8) des Netzbetreibers (10, 12, 14) schreibt den übermittelten Geldbetrag auf dem Gebühren- oder Gesprächszeitkonto des Mobiltelefons gut.

2. Verfahren nach Anspruch 1, **dadurch gekennzeichnet, dass** am Selbstbedienungsautomaten (2) einer von mehreren vorgegebenen Geldbeträgen zur Aufladung des Gebühren- oder Gesprächszeitkontos ausgewählt und eingezahlt wird.

3. Verfahren nach Anspruch 2, **dadurch gekennzeichnet, dass** zur Übermittlung der eingegebenen Telefonnummer und der Höhe des eingezahlten Geldbetrags zuvor im Zentralrechner (16) für jeden der vorgegebenen Geldbeträge ein Vorrat an Geheimzahlen der Netzbetreiber (10, 12, 14) gespeichert wird, und die eingegebene Telefonnummer nach ihrem Eingang beim Zentralrechner (16) in Kombination mit einer der gespeicherten Geheimzahlen an den Gebührenrechner (4, 6, 8) des ermittelten Netzbetreibers (10, 12, 14) übermittelt wird.

4. Verfahren nach Anspruch 2, **dadurch gekennzeichnet, dass** der Zentralrechner (16) zur Übermittlung der eingegebenen Telefonnummer und des eingezahlten Geldbetrags mit einem Server (48, 50, 52) des ermittelten Netzbetreibers (10, 12, 14) Verbindung aufnimmt, in dem für jeden der vorbestimmten Geldbeträge ein Vorrat an Geheimzahlen gespeichert ist, und vom Server (48, 50, 52) eine dem eingezahlten Geldbetrag entsprechende Geheimzahl anfordert, und dass der Zentralrechner (16) nach dem Eingang der angeforderten Geheimzahl diese Geheimzahl in Kombination mit der Telefonnummer an den Gebührenrechner (4, 6, 8) des ermittelten Netzbetreibers (10, 12, 14) übermittelt.

5. Verfahren nach einem der vorangehenden Ansprüche, **dadurch gekennzeichnet, dass** vom Selbstbedienungsautomaten (2) und/oder vom Zentralrechner (16) und/oder vom Server (48, 50, 52) übermittelte Daten vor ihrer Übermittlung verschlüsselt werden.

6. Verfahren nach einem der vorangehenden Ansprüche, **dadurch gekennzeichnet, dass** die Vorwahlnummer und Telefonnummer durch Eintippen an einer Tastatur (32) oder einer tastempfindlichen Anzeige (30) des Selbstbedienungsautomaten (2), durch Einführen einer Karte mit den darauf gespeicherten Nummern in ein Kartenlesegerät des Selbstbedienungsautomaten (2) oder durch Anrufen einer Servicenummer des Automaten (2) mit dem Mobiltelefon eingegeben wird.

7. Selbstbedienungsautomat zum Aufladen von Gebühren- oder Gesprächszeitkonten von Mobiltelefonen, die in Mobilfunknetzen einer Mehrzahl von verschiedenen Netzbetreibern (10, 12, 14) jeweils unter einer Vorwahlnummer und einer netzspezifischen Telefonnummer angemeldet sind, umfassend:
- eine Tastatur (32) oder tastempfindlichen Anzeige (30) zum Eingeben der Vorwahlnummer und der Telefonnummer eines Mobiltelefons;
- eine Geldannahmevorrichtung (38, 40) zur Annahme von Münzen und/oder Geldscheinen, umfassend eine Prüfeinrichtung zum Überprüfen der Münzen und/oder Geldscheine sowie eine Zähleinrichtung zum Ermitteln eines eingezahlten Geldbetrags;
- eine Anzeigevorrichtung (30) zum Anzeigen der eingegebenen Vorwahlnummer und Rufnummer und/oder des eingezahlten Geldbetrags;
- eine mit der Tastatur (32) oder tastempfindlichen Anzeige (30) und mit der Geldannahmevorrichtung (38, 40) verbundene Rechnereinheit, die mindestens einen Speicher zum Speichern der eingegebenen Vorwahlnummer und Telefonnummer des Mobiltelefons und der Höhe eines unmittelbar vor oder nach Eingabe dieser Nummern eingezahlten Geldbetrags umfasst und aus der eingegebenen Vorwahlnummer den Netzbetreiber (10, 12, 14) ermittelt, in dessen Netz das Mobiltelefon angemeldet ist,
- eine mit der Rechnereinheit verbundene Kommunikationsvorrichtung (26, 28) zur Übermittlung der gespeicherten Telefonnummer und der gespeicherten Höhe des Geldbetrags an einen Gebührenrechner (4, 6, 8) des ermittelten Netzbetreibers (10, 12, 14).

8. Kommunikationssystem, umfassend:
- eine Mehrzahl von Gebührenrechnern (4, 6, 8) von verschiedenen Netzbetreibern (10, 12, 14) von Mobilfunknetzen;
- eine Mehrzahl von Selbstbedienungsautomaten (2) nach Anspruch 7, die mit den Gebührenrechnern (4, 6, 8) kommunizieren und jeweils dem Gebührenrechner (4, 6, 8) desjenigen Netzbetreibers (10, 12, 14), dem eine am Automaten eingegebene Vorwahlnummer zugewiesen ist, eine zusammen mit der Vorwahlnummer eingegebene Telefonnummer sowie die Höhe eines unmittelbar davor oder danach eingezahlten Geldbetrags übermitteln.

9. Selbstbedienungsautomat zum Aufladen von Gebühren- oder Gesprächszeitkonten von Mobiltelefonen, die in Mobilfunknetzen einer Mehrzahl von verschiedenen Netzbetreibern (10, 12, 14) jeweils unter einer Vorwahlnummer und einer netzspezifischen Telefonnummer angemeldet sind, umfassend:
- eine Tastatur (32) oder tastempfindlichen Anzeige (30) zum Eingeben der Vorwahlnummer und der Telefonnummer eines Mobiltelefons;
- eine Geldannahmevorrichtung (38, 40) zur Annahme von Münzen und/oder Geldscheinen, umfassend eine Prüfeinrichtung zum Überprüfen der Münzen und/oder Geldscheine sowie eine Zähleinrichtung zum Ermitteln eines eingezahlten Geldbetrags;
- eine Anzeigevorrichtung (30) zum Anzeigen der eingegebenen Vorwahlnummer und Telefonnummer und/oder des eingezahlten Geldbetrags;
- eine mit der Tastatur (32) oder tastempfindlichen Anzeige (30) und mit der Geldannahmevorrichtung (38, 40) verbundene Rechnereinheit, die mindestens einen Speicher zum Speichern der eingegebenen Vorwahlnummer und Telefonnummer des Mobiltelefons und der Höhe eines unmittelbar vor oder nach Eingabe dieser Nummern eingezahlten Geldbetrags umfasst;
- eine mit der Rechnereinheit verbundene Kommunikationsvorrichtung (26, 28) zur Übermittlung der gespeicherten Vorwahlnummer oder eines aus der Vorwahlnummer ermittelten Netzbetreibers (10, 12, 14), in dessen Netz das Mobiltelefon angemeldet ist, an einen mit einer Mehrzahl von Selbstbedienungsautomaten (2) kommunizierenden Zentralrechner (16) eines Service-Providers oder Automatenaufstellers (18), in Kombination mit der zusammen mit der Vorwahlnummer eingegebenen Telefonnummer und der Höhe des Geldbetrags, zur Ermittlung des Netzbetreibers (10, 12, 14) aus der eingegebenen Vorwahlnummer, soweit nicht bereits erfolgt, und zur Weiterleitung der Telefonnummer und der Höhe des Geldbetrags an einen Gebührenrechner (4, 6, 8) des ermittelten Netzbetreibers (10, 12, 14).

10. Kommunikationssystem, umfassend:
- eine Mehrzahl von Gebührenrechnern (4, 6, 8) von verschiedenen Netzbetreibern (10, 12, 14) von Mobilfunknetzen;
- mindestens einen mit den Gebührenrechnern (4, 6, 8) kommunizierenden Zentralrechner (16) eines Service-Providers oder Automatenaufstellers (18), und
- eine Mehrzahl von Selbstbedienungsautomaten (2) nach Anspruch 9, die mit dem Zentralrechner (16) kommunizieren und diesem eine am Automaten (2) eingegebene Vorwahlnummer zur Ermittlung des Netzbetreibers (10, 12, 14) oder einen aus der Vorwahlnummer ermittelten Netzbetreiber (10, 12, 14) übermitteln, in Kombination mit einer zusammen mit der Vorwahlnummer eingegebenen Telefonnummer und der Höhe eines unmittelbar vor oder nach der Eingabe eingezahlten Geldbetrags zur Weiterleitung an den Gebührenrechner (4, 6, 8), dem die am Automaten (2) eingegebene Vorwahlnummer zugewiesen ist.

11. Verfahren zum Abheben eines Geldbetrags von einem Gebühren- oder Gesprächszeitkonto eines Mobiltelefons an Selbstbedienungsautomaten (2), umfassend die Schritte:
- an einem der Selbstbedienungsautomaten (2) gibt ein Benutzer die Rufnummer eines Mobiltelefons ein, von dessen Gebühren- oder Gesprächszeitkonto ein Geldbetrag abgehoben werden soll,
- auf Anforderung des Selbstbedienungsautomaten (2) identifiziert sich der Benutzer durch Eingabe eines Passworts oder durch ein benutzerspezifisches Merkmal,
- der Benutzer gibt die Höhe des abzuhebenden Geldbetrags ein,
- der Selbstbedienungsautomat (2) übermittelt die eingegebene Rufnummer, das Passwort oder benutzerspezifische Merkmal und die Höhe des abzuhebenden Geldbetrags an einen Gebührenrechner (4, 6, 8) eines Netzbetreibers (10, 12, 14), in dessen Netz das Mobiltelefon angemeldet ist,
- der Gebührenrechner (4, 6, 8) identifiziert das Gebühren- oder Gesprächszeitkonto anhand der Rufnummer, vergleicht das zusammen mit der Rufnummer übermittelte Passwort oder benutzerspezifische Merkmal mit einem unter der Rufnummer gespeicherten Passwort oder benutzerspezifischen Merkmal und überprüft, ob das anhand der Rufnummer identifizierte Gebühren- oder Gesprächszeitkonto eine ausreichende Deckung aufweist,
- wenn das übermittelte und das gespeicherte Passwort oder benutzerspezifische Merkmal übereinstimmen und das Konto eine ausreichende Deckung aufweist, autorisiert der Gebührenrechner (4, 6, 8) den Geldautomaten (2), den angeforderten Geldbetrag auszugeben.

12. Einrichtung zum Aufladen von Gebühren- oder Gesprächszeitkonten von Mobiltelefonen sowie zum Abheben von Geldbeträgen vom Gebühren- oder Gesprächszeitkonto, insbesondere zur Durchführung des Verfahrens nach Anspruch 1 und/oder 11, umfassend:
- eine Mehrzahl von Selbstbedienungsautomaten (2) mit:
- einer Tastatur (32) oder tastempfindlichen Anzeige (30), die eine Eingabe einer Rufnummer eines Mobiltelefons, der Höhe eines abzuhebenden Geldbetrags bzw. eines Passworts gestattet;
- einer Geldannahmevorrichtung (38, 40) zur Annahme von Münzen und/oder Geldscheinen, umfassend eine Prüfeinrichtung zum Überprüfen der Münzen und/oder Geldscheine sowie eine Zähleinrichtung zum Ermitteln eines eingezahlten Geldbetrags;
- einer Geldausgabevorrichtung (44) zur Ausgabe von Münzen und/oder Geldscheinen;
- einer Anzeigevorrichtung (30), die das Anzeigen einer eingegebenen Rufnummer, eines eingezahlten oder abzuhebenden Geldbetrags bzw. eines Passworts gestattet;
- einer mit der Tastatur (32) oder tastempfindlichen Anzeige (30) und mit der Geldannahmevorrichtung (38, 40) und der Geldausgabevorrichtung (44) verbundenen Rechnereinheit, die mindestens einen Speicher zum Speichern einer eingegebenen Rufnummer in Verbindung mit einem eingezahlten oder abzuhebenden Geldbetrag und einem Passwort oder benutzerspezifischen Merkmal umfasst;
- einer mit der Rechnereinheit verbundenen Kommunikationsvorrichtung (26, 28) zur Übermittlung der gespeicherten Rufnummer in Kombination mit einem eingezahlten Geldbetrag oder einem abzuhebenden Geldbetrag und einem Passwort oder benutzerspezifischen Merkmal;
- mindestens einen Gebührenrechner (4, 6, 8) eines Netzbetreibers (10, 12, 14) eines Mobilfunknetzes mit:
- einer Vorrichtung zur Identifizierung eines Gebühren- oder Gesprächszeitkontos anhand einer von einem der Selbstbedienungsautomaten (2) übermittelten Rufnummer;
- einer Vorrichtung zum Vergleich eines zusammen mit der Rufnummer übermittelten Passworts oder benutzerspezifischen Merkmals mit einem unter der Rufnummer gespeicherten Passwort oder benutzerspezifischen Merkmal, sowie eine Vorrichtung zum Vergleich eines zusammen mit der Rufnummer übermittelten abzuhebenden Geldbetrags mit einem Guthaben auf dem unter der Rufnummer geführten Gebühren- oder Gesprächszeitkonto;
- eine Kommunikationsvorrichtung (26, 28) zur Übermittlung einer Autorisationsinformation an den Geldautomaten (2) zur Ausgabe des abzuhebenden Geldbetrags.
